# EUROPEAN PATENT APPLICATION

(11) **EP 4 528 655 A1**
(43) Date of publication of application: **26.03.2025**
(21) Application number: 23814898.5
(22) Date of filing: 08.05.2023
(51) Int. Cl.: G06T 13/80

(54) **DIGITAL HUMAN DRIVING METHOD, DIGITAL HUMAN DRIVING DEVICE AND STORAGE MEDIUM**

(30) Priority: 30.05.2022 CN 202210599184
(71) Applicant: ZTE Corporation, Shenzhen, Guangdong 518057 (CN)
(72) Inventor: LU, Jianguo, Shenzhen, Guangdong 518057 (CN); SHI, Tinggan, Shenzhen, Guangdong 518057 (CN); SHEN, Guang, Shenzhen, Guangdong 518057 (CN); LI, Jun, Shenzhen, Guangdong 518057 (CN); ZHENG, Qingfang, Shenzhen, Guangdong 518057 (CN)
(74) Representative: Savi, Massimiliano
(86) International application number: PCT/CN2023/092794
(87) International publication number: WO 2023/231712

(57) **Abstract**

The present application discloses a digital human driving method, a digital human driving device, and a storage medium. The digital human driving method comprises: acquiring image information and audio information of a target subject (S110); performing recognition and determination on the image information and the audio information to obtain a determination result (S120); performing feature extraction processing on the image information and/or the audio information according to the determination result to obtain a first motion feature and/or a second motion feature (S130); inputting the first motion feature and/or the second motion feature and a digital human base image into a person generator (S140); and performing driving processing on the digital human base image by means of the person generator, and outputting a first digital human driving image (S150).

## Description

### CROSS-REFERENCE TO RELATED APPLICATION

This application is filed on the basis of Chinese patent application No. 202210599184.2 filed May 30, 2022, and claims priority to the Chinese patent application, the entire contents of which are incorporated herein by reference.

### TECHNICAL FIELD

The present disclosure relates to the technical field of digital human, and more particularly, to a digital human driving method, a digital human driving device, and a storage medium.

### BACKGROUND

With the rise of the concept of the metaverse, digital human technologies have garnered significant attention as a key component of the metaverse. The entire digital human industry is also developing rapidly. A virtual digital human refers to a comprehensive product that exists in the non-physical world, is created and used by computer means, and has multiple human characteristics (such as appearance characteristics, human performance ability, interaction ability, etc.). According to the dimension of human image, digital humans can be classified into 2D cartoon digital humans, 2D real-life digital humans, 3D cartoon digital humans, and 3D hyper-realistic digital humans. 2D real-life digital humans have the characteristics of being highly realistic and natural movements and expressions, and have been widely used in film and television, media, education, finance, and other fields.

The related technologies only support driving of a digital human with data of a single modality such as image, voice, or text. Even if there are data of multiple modalities in some cases, data of only one modality can be selected to drive the digital human. Driving a digital human based on an image has a strict requirement on the pose of the target person, and the digital human often cannot be effectively driven because the target person leaves the camera screen, the pose of the person is too large, or the face of the person is unclear. In the case of driving a digital human based on text, the text is often converted into voice to drive the digital human. Although the implementation of driving a digital human based on voice is reliable, the generated digital human has the problem of weak interactivity. In scenarios requiring a virtual digital human to interact with a real person, the conventional approach of driving a digital human based on voice cannot meet the interaction requirements. In addition, data of multiple modalities cannot be flexibly used for digital human driving processing. In practical applications, once modal data is damaged by some unexpected situations, leading to a sudden change in the screen during displaying of the digital human, making the generated digital human less realistic, and affecting user experience. How to more effectively drive a digital human to achieve a better representation effect is an urgent problem to be addressed.

### SUMMARY

Embodiments of the present disclosure provide a digital human driving method, a digital human driving device, and a storage medium.

In accordance with a first aspect of the present disclosure, an embodiment provides a digital human driving method, including: acquiring image information and audio information of a target object; performing recognition and determination on the image information and the audio information to obtain a determination result; performing feature extraction processing on the image information and/or the audio information according to the determination result to obtain a first motion feature and/or a second motion feature; inputting the first motion feature and/or the second motion feature and a digital human base image into a character generator; and performing driving processing on the digital human base image through the character generator, and outputting a first digital human driving image.

In accordance with a second aspect of the present disclosure, an embodiment provides a digital human driving device, including: a memory, a processor, and a computer program stored in the memory and executable by the processor, where the computer program, when executed by the processor, causes the processor to implement the digital human driving method in accordance with the first aspect.

In accordance with a third aspect of the present disclosure, an embodiment provides a computer-readable storage medium, storing computer-executable instructions which, when executed by a processor, cause the processor to implement the digital human driving method described above.

### BRIEF DESCRIPTION OF DRAWINGS

FIG. 1 is a schematic flowchart of a digital human driving method according to an embodiment of the present disclosure;
FIG. 2 is a schematic flowchart of S130 in FIG. 1;
FIG. 3 is a schematic flowchart of S140 in FIG. 1;
FIG. 4 is another schematic flowchart of S130 in FIG. 1;
FIG. 5 is another schematic flowchart of S130 in FIG. 1;
FIG. 6 is a schematic flowchart of a digital human driving method according to another embodiment of the present disclosure;
FIG. 7 is a schematic flowchart of a digital human driving method according to another embodiment of the present disclosure;
FIG. 8 is a schematic flowchart of a digital human driving method according to another embodiment of the present disclosure;
FIG. 9 is a schematic diagram of a digital human driving process applied to a virtual anchor scenario according to an embodiment of the present disclosure; and
FIG. 10 is a schematic diagram of a digital human driving device according to an embodiment of the present disclosure;

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

In the description of the present disclosure, the term "at least one" means one or more, the term "plurality of" (or multiple) means at least two, the term such as "greater than", "less than", "exceed" or variants thereof prior to a number or series of numbers is understood to not including the number adjacent to the term. In addition, although a logical order is shown in the flowcharts, in some cases, the operations shown or described may be performed in an order different from that in the flowcharts. In the specification, claims, or accompanying drawings, the terms "first", "second", or the like are intended to distinguish between similar objects but do not indicate a particular order or sequence.

The present disclosure provides a digital human driving method, a digital human driving device, and a computer-readable storage medium. By the scheme of the embodiment of the present disclosure, image information and audio information of a target object are acquired, recognition and determination are performed on the image information and the audio information to obtain a determination result, feature extraction processing is performed on the image information and/or the audio information according to the determination result to obtain a first motion feature and/or a second motion feature, driving processing is performed on the first motion feature and/or the second motion feature and a digital human base image through the character generator, and a driven digital human image is outputted. As such, a motion feature to be used for driving the digital human can be flexibly selected according to the status of acquisition of image information and audio information, and corresponding digital human driving processing can be performed based on the movement features selected for different acquisition statuses to obtain a digital human with better representation effect.

The embodiments of the present disclosure will be further described in detail below in conjunction with the accompanying drawings.

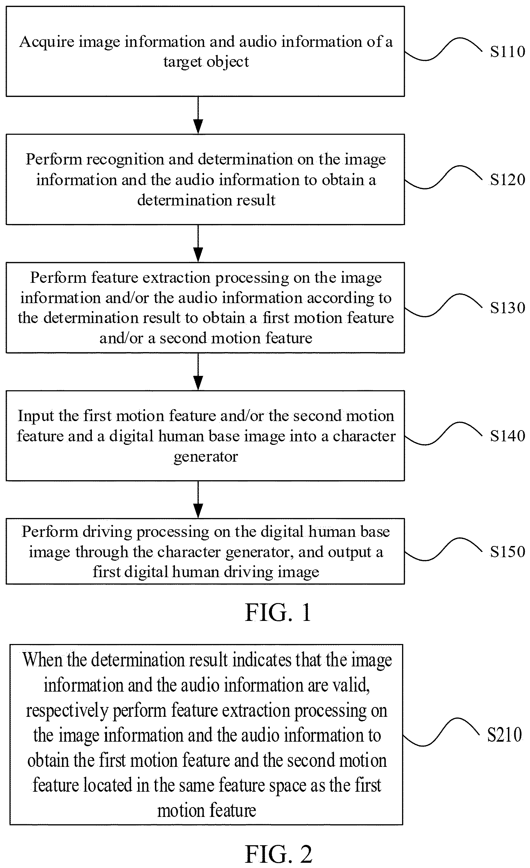

FIG. 1 is a schematic flowchart of a digital human driving method according to an embodiment of the present disclosure. The digital human driving method includes, but not limited to, the following steps S110, S120, S130, S140, and S150.

At S110, image information and audio information of a target object are acquired.

In this step, an image acquisition device acquires image information and audio information of a target object. In an embodiment, a camera and a microphone are used to acquire the image information and the audio information of the target object. When the digital human driving method is applied to a virtual anchor scenario, the target object is a real anchor. The device used for acquiring image information and audio information is not particularly limited in the present disclosure.

At S120, recognition and determination are performed on the image information and the audio information to obtain a determination result.

In this step, recognition and determination are performed on the image information and the audio information to obtain a determination result. It can be understood that the actual application scenario is relatively complex, and there are certain changes in the behavior or action of the target object, which means that the image information and/or the audio information acquired by the information acquisition device may be of low quality, and it is difficult to acquire a valid motion feature about the target object from the low-quality image information and/or audio information. For example, when a head pose in the acquired image information exceeds a certain range, there is some distortion in the generated image, making it difficult to acquire a valid motion feature from the image information. For another example, when there is large noise in the real scene, the audio information is contaminated by the noise, making it difficult to acquire a valid motion feature from the acquired audio information. In an embodiment, a pose judgment network may be used to detect the head pose of the target object. When the head pose exceeds a certain range, there is some distortion in the generated image. In this case, the acquired image information is of low quality and is invalid. Recognition and determination are performed on the image information and the audio information to obtain a determination result indicating whether the image information and/or the audio information is valid, to facilitate the subsequent selection of an effective driving modality for corresponding digital human driving processing.

It can be understood that before recognition and determination are performed on the image information and the audio information, the acquired image information and audio information may be preprocessed to increase the accuracy of recognition and determination.

The method used in the process of performing recognition and determination on the image information and the audio information is not particularly limited in the present disclosure, and any method may be used as long as recognition and determination can be performed on the image information and the audio information to obtain a determination result indicating whether the image information and/or the audio information is valid.

At S130, feature extraction processing is performed on the image information and/or the audio information according to the determination result to obtain a first motion feature and/or a second motion feature.

In this step, feature extraction processing is performed on the image information and/or the audio information according to the determination result to obtain a first motion feature and/or a second motion feature. In an embodiment, the first motion feature represents a first face motion feature, and the second motion feature represents a second face motion feature. In a feasible implementation, before performing feature extraction processing on the image information and/or the audio information according to the determination result, the method further includes: acquiring an image-driven digital human network and a voice-driven digital human network. Then, feature extraction processing is performed on the image information through the image-driven digital human network to obtain the first motion feature, and feature extraction processing is performed on the audio information through the voice-driven digital human network to obtain the second motion feature. In an embodiment, the first motion feature extracted by the image-driven digital human network and the second motion feature extracted by the voice-driven digital human network are located in the same feature space, i.e., the two motion features represent the same face motion description. For example, when the target object says a word "ah", the first motion feature and the second motion feature obtained through feature extraction on the image information and audio information acquired in this case can both represent a motion state in which the target object says the word "ah".

In an embodiment, the image-driven digital human network may be a first-order motion model, and in the process of digital human driving processing using the image information, the first-order motion model is used to extract a face motion feature from the image information. In the process of digital human driving processing using the audio information, a self-designed voice-driven digital human network may be used to extract a face motion feature from the audio information.

The method of generating the image-driven digital human network and the voice-driven digital human network is not particularly limited in the present disclosure, and any method may be used as long as the feature extraction processing can be implemented.

At S140, the first motion feature and/or the second motion feature and a digital human base image are inputted into a character generator.

In this step, the first motion feature and/or the second motion feature and a digital human base image are inputted into a character generator. Because the first motion feature and the second motion feature are located in the same feature space and describe the same motion state, the same generator may be used to perform subsequent image synthesis processing according to the first motion feature and/or the second motion feature.

In an embodiment, the digital human base image represents a reference image to be driven, and the digital human base image may be an identification photo of a person, a portrait of a person, etc. According to a feasible embodiment of the present disclosure, the network used in the feature extraction processing needs to be compatible with the generator for image synthesis processing according to the motion features. When the image-driven digital human network is a key point detector of a first-order motion model, the generator used should be a generator of the first-order motion model. The model used by the image-driven digital human network and the matching generator is not particularly limited in the present disclosure. For example, a Practical Facial Landmark Detector (PFLD) may be used in the feature extraction processing, and a face animation generator (e.g., Neural Talking Heads) may be used as a generator in the decoder.

At S150, driving processing is performed on the digital human base image through the character generator, and a first digital human driving image is outputted.

In this step, driving processing is performed on the digital human base image through the character generator, and a first digital human driving image is outputted. In a virtual anchor application scenario, the digital human base image is a virtual anchor character image. The first digital human driving image obtained through processing in S110 to S150 is a single frame. By repeating the processing in S110 to S150 for multiple times, a plurality of frame images may be obtained, i.e., a sequence of digital human driving image frames may be obtained.

By the method of the present disclosure shown in FIG. 1, image information and audio information of a target object are acquired, recognition and determination are performed on the image information and the audio information to obtain a determination result, feature extraction processing is performed on the image information and/or the audio information according to the determination result to obtain a first motion feature and/or a second motion feature, driving processing is performed on the first motion feature and/or the second motion feature and a digital human base image through the character generator, and a driven digital human image is outputted. As such, a motion feature to be used for driving the digital human can be flexibly selected according to the status of acquisition of image information and audio information, and corresponding digital human driving processing can be performed based on the movement features selected for different acquisition statuses to obtain a digital human with better representation effect.

FIG. 2 is a schematic flowchart of S130 in FIG. 1. S130 of performing feature extraction processing on the image information and/or the audio information according to the determination result to obtain a first motion feature and/or a second motion feature includes, but no limited to, a following step S210.

At S210, when the determination result indicates that the image information and the audio information are valid, feature extraction processing is respectively performed on the image information and the audio information to obtain the first motion feature and the second motion feature located in the same feature space as the first motion feature.

In this step, when the determination result indicates that the image information and the audio information are valid, feature extraction processing is respectively performed on the image information and the audio information through the image-driven digital human network and the voice-driven digital human network to obtain the first motion feature and the second motion feature located in the same feature space as the first motion feature.

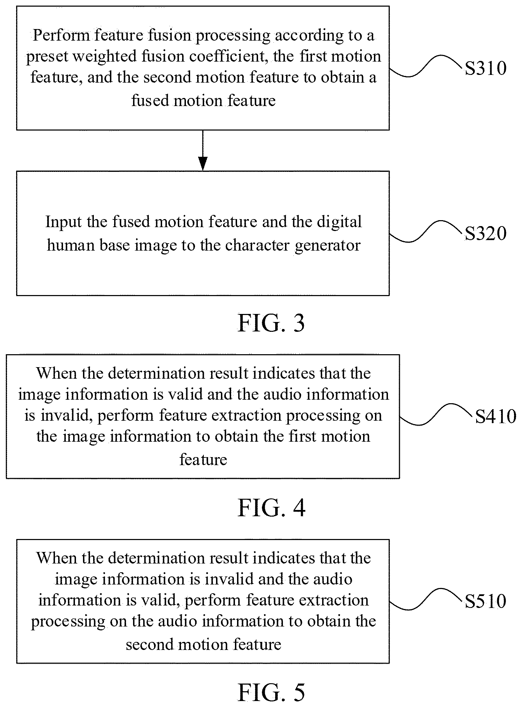

FIG. 3 is a schematic flowchart of S140 in FIG. 1. When the determination result indicates that the image information and the audio information are valid, S140 of inputting the first motion feature and/or the second motion feature and a digital human base image into a character generator includes, but no limited to, the following steps S310 and S320.

At S310, feature fusion processing is performed according to a preset weighted fusion coefficient, the first motion feature, and the second motion feature to obtain a fused motion feature.

In this step, feature fusion processing is performed according to a preset weighted fusion coefficient, the first motion feature, and the second motion feature to obtain a fused motion feature. Because the first motion feature extracted from the image information and the second motion feature extracted from the audio information are located in the same feature space, weighted processing may be performed on the two motion features to obtain a fused motion feature, which can more accurately represent the motion feature of the person. For example, when the mouth of the real anchor is blocked by a hand, the mouth shape of the person cannot be accurately generated in the generated image. In this case, the second motion feature extracted from the audio information can effectively make up for the inaccuracy of the mouth shape. The fusion process may be expressed as: F=a*F1+(1-a)*F2. In this formula, F represents the fused motion feature, a represents the preset weighted fusion coefficient, F1 represents the first motion feature, and F2 represents the second motion feature. The value range of the preset weighted fusion coefficient a should be 0 to 1. It can be understood that the specific value of the preset weighted fusion coefficient may be set according to actual synthesis requirements, and is not particularly limited in the present disclosure.

At S320, the fused motion feature and the digital human base image are inputted to the character generator.

In this step, after the fused motion feature is obtained, the fused motion feature and the digital human base image are inputted to the character generator. The character generator can synthesize a first digital human driving image that more accurately represents the image of a real person according to the fused motion feature and the digital human base image. In a case where data of multiple modalities coexists, i.e., there are image information and audio information, feature fusion processing is performed on the data of the modalities to obtain a fused motion feature, and a more accurate representation is generated by using the fused motion feature.

In some scenarios, data of a region may be missing in the video information due to blocking or other reasons, making it difficult to generate an accurate digital human according to the video information. For example, the mouth of the person is blocked in the image information used for driving, and the image-driven digital human network cannot estimate the motion of the mouth. In this case, feature extraction processing may be performed on the audio information to obtain the missing motion feature of the mouth, thereby improving the accuracy of the digital human generated.

FIG. 4 is another schematic flowchart of S130 in FIG. 1. S130 of performing feature extraction processing on the image information and/or the audio information according to the determination result to obtain a first motion feature and/or a second motion feature includes, but no limited to, a following step S410.

At S410, when the determination result indicates that the image information is valid and the audio information is invalid, feature extraction processing is performed on the image information to obtain the first motion feature.

In this step, when the determination result indicates that the image information is valid and the audio information is invalid, feature extraction processing is performed on the image information through the image-driven digital human network to obtain the first motion feature. In an embodiment, after the first motion feature is obtained, S130 of inputting the first motion feature and/or the second motion feature and a digital human base image into a character generator further includes: inputting the first motion feature and the digital human base image to the character generator. The character generator performs subsequent image synthesis processing according to the first motion feature and the digital human base image. With the scheme of the present disclosure, when the audio information is invalid and unusable, digital human driving processing can still be performed based on the image information, to cope with some unexpected situations in the practical digital human application scenarios and ensure the normal operation of the digital human in practical application scenarios.

FIG. 5 is another schematic flowchart of S130 in FIG. 1. S130 of performing feature extraction processing on the image information and/or the audio information according to the determination result to obtain a first motion feature and/or a second motion feature includes, but no limited to, a following step S510.

At S510, when the determination result indicates that the image information is invalid and the audio information is valid, feature extraction processing is performed on the audio information to obtain the second motion feature.

In this step, when the determination result indicates that the image information is invalid and the audio information is valid, feature extraction processing is performed on the audio information through the audio-driven digital human network to obtain the second motion feature. In an embodiment, after the second motion feature is obtained, S130 of inputting the first motion feature and/or the second motion feature and a digital human base image into a character generator further includes: inputting the second motion feature and the digital human base image to the character generator. The character generator performs subsequent image synthesis processing according to the second motion feature and the digital human base image. With the scheme of the present disclosure, when the image information is invalid and unusable, digital human driving processing can still be performed based on the audio information, to cope with some unexpected situations in the practical digital human application scenarios and ensure the normal operation of the digital human in practical application scenarios.

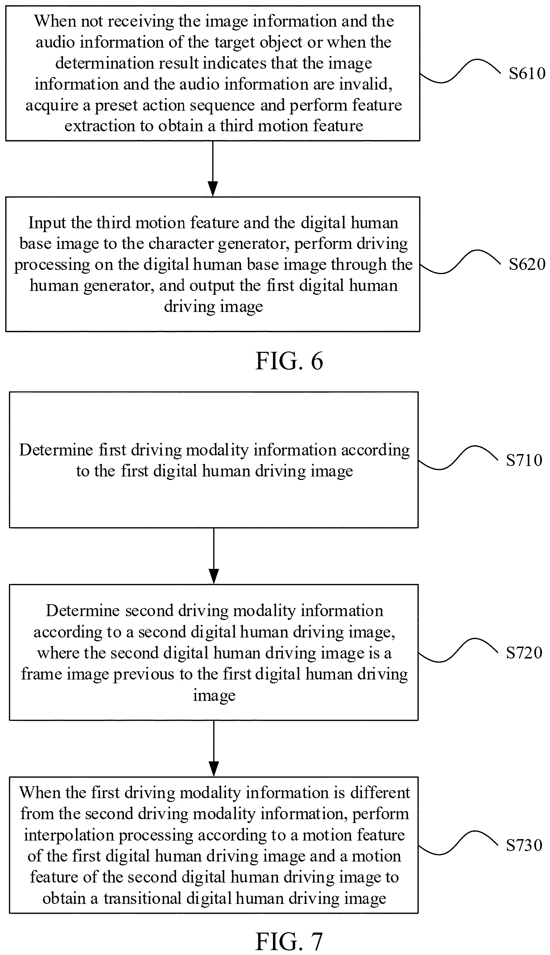

FIG. 6 is a schematic flowchart of a digital human driving method according to another embodiment of the present disclosure. The digital human driving method further includes the following steps S610 and S620.

At S610, when not receiving the image information and the audio information of the target object or when the determination result indicates that the image information and the audio information are invalid, a preset action sequence is acquired and feature extraction is performed on the preset action sequence to obtain a third motion feature.

In this step, when not receiving the image information and the audio information of the target object or when the determination result indicates that the image information and the audio information are invalid, a preset action sequence is acquired and feature extraction is performed on the preset action sequence to obtain a third motion feature. In a practical application scenario, there is a possibility that some or all of the information acquisition devices become faulty or fail and no image information or audio information of the target object can be read from the information acquisition devices, or acquired image information and audio information of the target object are invalid and cannot be used for feature extraction processing. In this case, the preset action sequence is acquired and feature extraction is performed on the preset action sequence to obtain the third motion feature. The preset action sequence may be one or more expression states, such as smiling, opening and closing of the mouth, etc., and can ensure that the image sequence of the digital human can be normally driven and displayed when neither the image information nor the audio information can be used.

At S620, the third motion feature and the digital human base image are inputted to the character generator, driving processing is performed on the digital human base image through the character generator, and the first digital human driving image is outputted.

In this step, after the third motion feature is obtained, the third motion feature and the digital human base image are inputted to the character generator, driving processing is performed on the digital human base image through the character generator, and the first digital human driving image is outputted. The character generator performs subsequent image synthesis processing according to the third motion feature and the digital human base image. With the scheme of the present disclosure, when both the image information and the audio information are invalid and unusable, digital human driving processing can still be performed based on the preset action sequence, to cope with some unexpected situations in the practical digital human application scenarios and ensure the normal operation of the digital human in practical application scenarios.

FIG. 7 is a schematic flowchart of a digital human driving method according to another embodiment of the present disclosure. The digital human driving method further includes the following steps S710, S720, and S730.

At S710, first driving modality information is determined according to the first digital human driving image.

In this step, first driving modality information is determined according to the first digital human driving image, where the first driving modality information is modal information corresponding to the fused motion feature, the first motion feature, the second motion feature, or the third motion feature.

At S720, second driving modality information is determined according to a second digital human driving image, where the second digital human driving image is a frame image previous to the first digital human driving image.

In this step, second driving modality information is determined according to a second digital human driving image, where the second digital human driving image is a frame image previous to the first digital human driving image, and the second driving modality information is modal information corresponding to the fused motion feature, the first motion feature, the second motion feature, or the third motion feature.

At S730, when the first driving modality information is different from the second driving modality information, interpolation processing is performed according to a motion feature of the first digital human driving image and a motion feature of the second digital human driving image to obtain a transitional digital human driving image.

In this step, the first driving modality information is compared with the second driving modality information, interpolation processing is performed according to a motion feature of the first digital human driving image and a motion feature of the second digital human driving image to obtain a transitional digital human driving image. It can be understood that when a plurality of frames of image information of the target object is acquired, the acquired audio information is an audio stream. In a case where data of multiple modalities coexists, there is a possibility that a plurality of consecutive frames of image information are unusable or missing. In this case, it is necessary to perform digital human driving processing based on the audio information which is usable to generate a next frame of digital human image, to ensure the normal progress of digital human driving. In a case where a driving modality used in the current frame of digital human image is different from a driving modality used in the previous frame of digital human image, a sudden change may occur in the image of the digital human being displayed in practical scenarios, which makes the displaying of the digital human not smooth and affecting viewing experience. Therefore, when the first driving modality information is different from the second driving modality information, it is necessary to perform modality switching, to achieve a smooth transition from the previous frame of digital human image to the current frame of digital human image, making the displayed digital human more realistic.

In an embodiment, interpolation processing is performed according to the motion feature of the first digital human driving image and the motion feature of the second digital human driving image to obtain a transitional motion feature, the transitional digital human driving image is generated according to the transitional motion feature, and then the transitional digital human driving image is displayed within a preset transition time to achieve a smooth transition from the second digital human driving image to the first digital human driving image.

Driving modalities involved in the present disclosure include image information, audio information, preset action sequence, and a combination of image information and audio information. The modality switching may occur between any two driving modalities, for example, may be smooth switching from driving based on the image information to driving based on the audio information, smooth switching from driving based on the preset action sequence to driving based on the image information, etc.

It can be understood that text information may be converted into audio information by a text-to-speech converter, and the driving modalities in the present disclosure may also include text information.

In an embodiment, the preset transition time may be set to about 0.5 seconds to 1 second. The interpolation processing may be performed using a fitting and interpolation method or a neural network interpolation method. The method used in the interpolation process is not particularly limited in the present disclosure.

In the embodiments of the present disclosure, in a case where data of multiple modalities coexists, i.e., there are image information and audio information, a driving modality (image information, audio information, preset action sequence, or a combination of image information and audio information) to be used for driving the digital human can be flexibly selected according to the status of acquisition of image information and audio information, and corresponding digital human driving processing can be performed based on the driving modalities selected for different acquisition statuses to obtain a digital human with better representation effect. According to the embodiments of the present disclosure, when audio information or image information is unusable or is not suitable for use, other usable driving modalities can be used for digital human driving, such that the driven digital human display can be continuously and smoothly displayed. The digital human generated based on the embodiments of the present disclosure not only provides high interactivity of driving based on image information, but also has the advantage of stable image generation of driving based on voice.

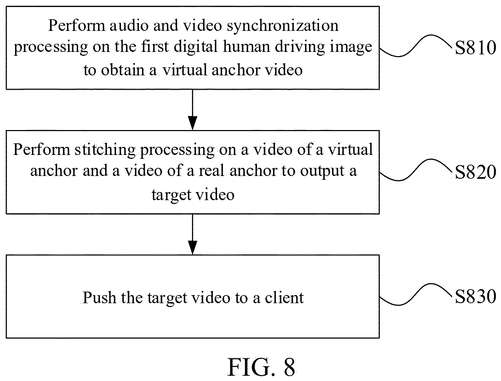

In an embodiment, in an anchor scenario, a processing procedure shown in FIG. 8 may be performed to allow a virtual anchor and a real anchor to perform together. FIG. 8 is a schematic flowchart of a digital human driving method according to another embodiment of the present disclosure. The digital human driving method further includes the following steps S810, S820, and S830.

At S810, audio and video synchronization processing is performed on the first digital human driving image to obtain a virtual anchor video.

At S820, stitching processing is performed on a video of a virtual anchor and a video of a real anchor to output a target video.

At S830, the target video is pushed to a client.

Through the processing in S810 to S830, after the first digital human driving image is obtained, audio and video synchronization processing is performed on the first digital human driving image to obtain a virtual anchor video; then stitching processing is performed on a video of a virtual anchor and a video of a real anchor to obtain a target video; and the target video is pushed to a client, so that a user of the client can view the 2D digital human driven based on a real-life image on the client. In practice, image matting may be performed on an image of the virtual anchor, and the virtual anchor may be integrated into a video of the real anchor, such that the state presented by the digital human is closer to that of the real anchor, making the digital human more realistic.

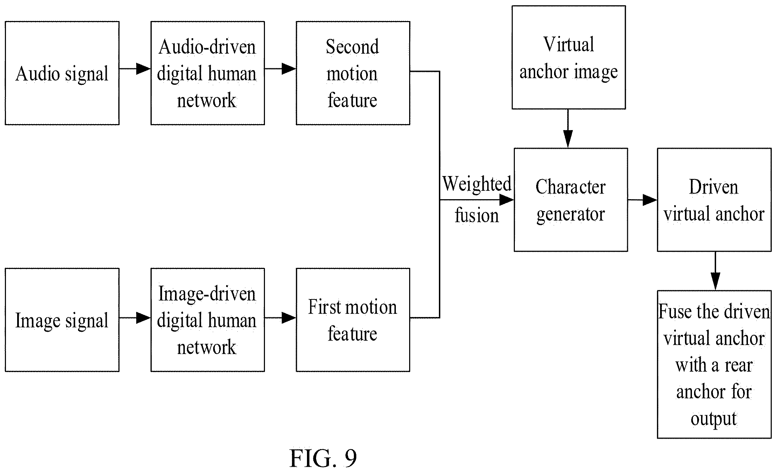

FIG. 9 is a schematic diagram of a digital human driving process applied to a virtual anchor scenario according to an embodiment of the present disclosure. FIG. 9 schematically illustrates processing of a single frame of digital human driving image. In a virtual anchor scenario, a sequence of digital human driving driven image frames may be obtained by repeating the processing multiple times. In an embodiment, an information acquisition device acquires image information and audio information of a real anchor. When both the image information and the audio information are valid, feature extraction processing is respectively performed on the image information and the audio information through an image-driven digital human network and a voice-driven digital human network to obtain a first motion feature and a second motion feature. Weighted processing is performed on the first motion feature and the second motion feature to obtain a fused motion feature. The fused motion feature and an image of a virtual anchor are inputted into a character generator. The character generator performs digital human driving processing, and outputs a driven virtual anchor. Then, the driven virtual anchor is fused with the real anchor and pushed to a client.

In an embodiment, the digital human driving method according to the embodiments of the present disclosure can be applied not only to a virtual anchor scenario, but also to a video conference scenario and a virtual customer service application scenario. In practical deployment, the image-driven digital human network for image feature extraction and the video-driven digital human network for voice feature extraction may be deployed at a sending end of a video conference as a video encoder, and the generator may be deployed at a receiving end as a video decoder. Because the extracted motion features represent a real-time compact motion, the bandwidth required for communication in the video conference can be greatly reduced, thereby improving user experience in a weak network environment.

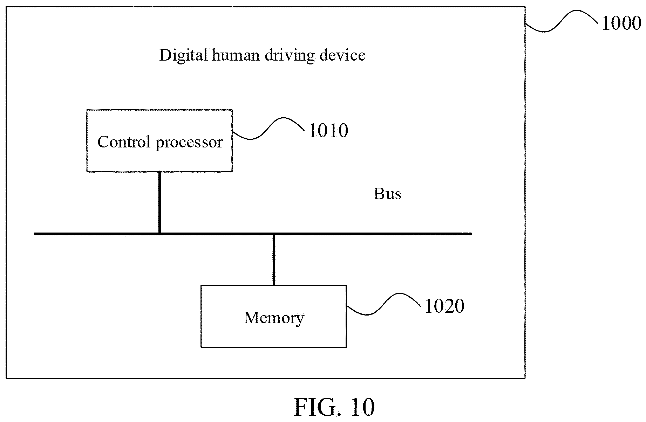

FIG. 10 is a schematic diagram of a digital human driving device according to an embodiment of the present disclosure. The digital human driving device 1000 according to the embodiment of the present disclosure includes one or more control processors 1010 and one or more memories 1020. FIG. 10 uses one control processor 1010 and one memory 1020 as an example. The control processor 1010 and the memory 1020 may be connected by a bus or in other ways. Connection by a bus is used as an example in FIG. 10.

The memory 1020, as a non-transitory computer-readable storage medium, may be configured for storing a non-transitory software program and a non-transitory computer-executable program. In addition, the memory 1020 may include a high-speed random access memory, and may also include a non-transitory memory, e.g., at least one magnetic disk storage device, flash memory device, or other non-transitory solid-state storage device. In some implementations, the memory 1020 may include memories located remotely from the control processor 1010, and the remote memories may be connected to the digital human driving device 1000 via a network. Examples of the network include, but not limited to, the Internet, an intranet, a local area network, a mobile communication network, and combinations thereof.

Those having ordinary skills in the art may understand that the apparatus structure shown in FIG. 10 does not constitute a limitation to the digital human driving device 1000, and the digital human driving device 1000 may include more or fewer components than those shown in the figure, or some components may be combined, or a different component arrangement may be used.

The non-transitory software program and instructions required to implement the digital human driving method applied to the digital human driving device 1000 of the foregoing embodiments are stored in the memory 1020 which, when executed by the control processor 1010, cause the control processor 1010 to implement the digital human driving method applied to the digital human driving device 1000 of the foregoing embodiments, for example, implement the method steps S110 to S150 in FIG. 1, the method step S210 in FIG. 2, the method steps S310 to S320 in FIG. 3, the method step S410 in FIG. 4, the method step S510 in FIG. 5, the method steps S610 to S620 in FIG. 6, the method steps S710 to S730 in FIG. 7, or the method steps S810 to S830 in FIG. 8.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by one or more control processors, for example, by a control processor 1010 in FIG. 10, may cause the one or more control processors 1010 to implement the digital human driving method in the above method embodiments, for example, implement the method steps S110 to S150 in FIG. 1, the method step S210 in FIG. 2, the method steps S310 to S320 in FIG. 3, the method step S410 in FIG. 4, the method step S510 in FIG. 5, the method steps S610 to S620 in FIG. 6, the method steps S710 to S730 in FIG. 7, or the method steps S810 to S830 in FIG. 8.

Embodiments of the present disclosure include: acquiring image information and audio information of a target object; performing recognition and determination on the image information and the audio information to obtain a determination result; performing feature extraction processing on the image information and/or the audio information according to the determination result to obtain a first motion feature and/or a second motion feature; inputting the first motion feature and/or the second motion feature and a digital human base image into a character generator; and performing driving processing on the digital human base image through the character generator, and outputting a first digital human driving image. By the scheme of the embodiment of the present disclosure, image information and audio information of a target object are acquired, recognition and determination are performed on the image information and the audio information to obtain a determination result, feature extraction processing is performed on the image information and/or the audio information according to the determination result to obtain a first motion feature and/or a second motion feature, driving processing is performed on the first motion feature and/or the second motion feature and a digital human base image through the character generator, and a driven digital human image is outputted. As such, a motion feature to be used for driving the digital human can be flexibly selected according to the status of acquisition of image information and audio information, and corresponding digital human driving processing can be performed based on the movement features selected for different acquisition statuses to obtain a digital human with better representation effect.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skill in the art, the communication medium typically includes computer-readable instructions, data structures, program modules, or other data in a modulated data signal such as a carrier or other transport mechanism, and can include any information delivery medium.

## Claims

1. A digital human driving method, comprising:
acquiring image information and audio information of a target object;
performing recognition and determination on the image information and the audio information to obtain a determination result;
performing feature extraction processing on the image information and/or the audio information according to the determination result to obtain a first motion feature and/or a second motion feature;
inputting the first motion feature and/or the second motion feature and a digital human base image into a character generator; and
performing driving processing on the digital human base image through the character generator, and outputting a first digital human driving image.

2. The digital human driving method of claim 1, wherein performing feature extraction processing on the image information and/or the audio information according to the determination result to obtain a first motion feature and/or a second motion feature comprises:
in response to the determination result indicating that the image information and the audio information are valid, respectively performing feature extraction processing on the image information and the audio information to obtain the first motion feature and the second motion feature located in the same feature space as the first motion feature.

3. The digital human driving method of claim 2, wherein inputting the first motion feature and/or the second motion feature and a digital human base image into a character generator further comprises:
performing feature fusion processing according to a preset weighted fusion coefficient, the first motion feature, and the second motion feature to obtain a fused motion feature; and
inputting the fused motion feature and the digital human base image to the character generator.

4. The digital human driving method of claim 1, wherein performing feature extraction processing on the image information and/or the audio information according to the determination result to obtain a first motion feature and/or a second motion feature comprises:
in response to the determination result indicating that the image information is valid and the audio information is invalid, performing feature extraction processing on the image information to obtain the first motion feature.

5. The digital human driving method of claim 4, wherein inputting the first motion feature and/or the second motion feature and a digital human base image into a character generator further comprises:
inputting the first motion feature and the digital human base image to the character generator.

6. The digital human driving method of claim 1, wherein performing feature extraction processing on the image information and/or the audio information according to the determination result to obtain a first motion feature and/or a second motion feature comprises:
in response to the determination result indicating that the image information is invalid and the audio information is valid, performing feature extraction processing on the audio information to obtain the second motion feature.

7. The digital human driving method of claim 6, wherein inputting the first motion feature and/or the second motion feature and a digital human base image into a character generator further comprises:
inputting the second motion feature and the digital human base image to the character generator.

8. The digital human driving method of claim 1, further comprising:
in response to not receiving the image information and the audio information of the target object or in response to the determination result indicating that the image information and the audio information are invalid, acquiring a preset action sequence and performing feature extraction on the preset action sequence to obtain a third motion feature; and
inputting the third motion feature and the digital human base image to the character generator, performing driving processing on the digital human base image through the character generator, and outputting the first digital human driving image.

9. The digital human driving method of claim 1, 3, 5, 7, or 8, further comprising:
determining first driving modality information according to the first digital human driving image;
determining second driving modality information according to a second digital human driving image, wherein the second digital human driving image is a frame image previous to the first digital human driving image; and
in response to the first driving modality information being different from the second driving modality information, performing interpolation processing according to a motion feature of the first digital human driving image and a motion feature of the second digital human driving image to obtain a transitional digital human driving image.

10. A digital human driving device, comprising: a memory, a processor, and a computer program stored in the memory and executable by the processor, wherein the computer program, when executed by the processor, causes the processor to perform the digital human driving method of any of claims 1 to 9.

11. A computer storage medium, storing computer-executable instructions which, when executed by a processor, cause the processor to perform the digital human driving method of any of claims 1 to 9.
